# DEMANDE DE BREVET EUROPEEN

(11) **EP 1 473 547 A1**
(43) Date de publication de la demande: **03.11.2004**
(21) Numéro de dépôt: 03291070.5
(22) Date de dépôt: 02.05.2003
(51) Int. Cl.: G01D 5/22, H01F 21/06

(54) **Capteur inductif de position angulaire**

(71) Demandeur: Precilec, 89002 Auxerre Cédex (FR)
(72) Inventeur: Foucher, Christian, 89000 Auxerre (FR)
(74) Mandataire: Regi, François-Xavier

(57) **Abrégé**

Le capteur inductif différentiel de position angulaire comprend un stator et un rotor. Le stator a une armature (10,11) de révolution autour d'un axe, en matériau ferromagnétique, portant une bobine primaire annulaire (13) centrée sur l'axe, prévue pour être alimentée par une tension alternative, de constitution telle qu'elle génère un flux électromagnétique dans l'armature, et deux bobines secondaires identiques (14a, 14b), disposées symétriquement par rapport a un plan médian passant par l'axe, chacune en forme d'anneau cintré (16), traversant un bras de l'armature par deux encoches ménagées dans le sens axial dans l'armature, autour du plan médian. Le rotor, également en matériau ferromagnétique, a successivement, dans le sens axial, un tronçon de révolution situé au droit du bobinage primaire et un tronçon présentant, au droit des bobines secondaires, un segment semi-cylindrique provoquant un couplage de la bobine primaire avec les bobines secondaires qui varie en fonction de la position angulaire du rotor.

## Description

La présente invention concerne les capteurs inductifs de position angulaire, et plus particulièrement les capteurs inductifs différentiels, fréquemment désignés par l'abréviation anglo-saxonne RVDT (Rotary variable differential transformer).

Un capteur classique de ce type comprend deux parties déplaçables angulairement l'une par rapport à l'autre autour d'un axe. Par commodité, on désignera l'une de ces parties comme étant un stator et l'autre comme étant un rotor. Mais cela n'implique pas que le stator ait une orientation fixe. Le stator comprend une armature ou carcasse en matériau ferromagnétique portant des bobinages primaires et secondaires, constituant un transformateur. Le rotor et les éléments du stator ont une constitution telle que les tensions aux bornes des bobines constituant le bobinage secondaire soient fonction de la position angulaire du rotor, pour une tension donnée d'alimentation du primaire.

On connaît déjà des capteurs inductifs différentiels fournissant deux tensions de sortie qui varient de façon sensiblement linéaire pour un domaine de position angulaire de ± 40° par rapport à une position médiane. La somme des deux tensions secondaires, fournies chacune par une bobine, est sensiblement constante et la différence des deux tensions secondaires est sensiblement proportionnelle à l'angle du rotor par rapport à une position de référence.

On a déjà proposé de nombreuses constitutions de tels capteurs. On pourra par exemple se reporter, pour trouver des exemples, aux documents EP 0 094 286, US 4 345 230, US 5 701 114 et FR 2 452 818.

Les capteurs inductifs différentiels existants, sans balai ni bobinage sur le rotor, présentent beaucoup d'intérêt mais aussi un certain nombre de limitations. En particulier, la mesure d'angle n'est en général possible avec une précision élevée que dans un domaine relativement faible, habituellement de ± 35°. Sur la plupart d'entre eux, les tensions fournies par les bobines secondaires présentent un déphasage très variable en fonction de divers paramètres.

La présente invention vise à fournir un capteur inductif de position angulaire répondant mieux que ceux antérieurement connus aux exigences de la pratique, notamment ayant un domaine angulaire d'utilisation important (ce qui permettra souvent d'éviter l'emploi d'un engrenage réducteur d'angle de rotation) et une linéarité de réponse élevée, tout en restant de constitution simple.

Dans ce but, l'invention propose notamment un capteur inductif différentiel de position angulaire, comprenant :
- un stator ayant une armature de révolution autour d'un axe, en matériau ferromagnétique, portant:
   . une bobine primaire annulaire centrée sur l'axe, prévue pour être alimentée par une tension alternative, de constitution telle qu'elle génère un flux électromagnétique dans l'armature et
   . deux bobines secondaires identiques, disposées symétriquement par rapport à un plan médian passant par l'axe, chacune en forme d'anneau cintré traversant un bras de l'armature par deux encoches ménagées dans le sens axial dans l'armature, autour du plan médian, et
- un rotor également en matériau ferromagnétique, ayant, dans le sens axial, un tronçon de révolution ou semi-cylindrique situé au droit du bobinage primaire et un tronçon présentant, au droit des bobines secondaires, un segment semi-cylindrique provoquant un couplage de la bobine primaire avec les bobines secondaires qui varie en fonction de la position angulaire du rotor.

La bobine primaire peut être formée par un seul bobinage. Elle peut également être constituée de deux bobinages annulaires placés de part et d'autre des bobines secondaires.

L'armature entoure le rotor. Elle comporte avantageusement une première partie annulaire, qui peut être en matériau massif, portant un support de la bobine primaire et une seconde partie en forme d'anneau, en matériau ferromagnétique feuilleté dans le sens axial, portant les bobines secondaires.

La première partie peut notamment avoir une section droite en L.

Les deux bobines secondaires peuvent traverser la seconde partie par des encoches communes. Elles peuvent avoir chacune un développement angulaire aussi proche que possible de 180°.

Selon une variante, les deux bobines secondaires présentent une forme générale ayant une courbure telle qu'elles s'éloignent de l'axe, en déplacement de l'axe vers les encoches.

Un capteur de ce type a été réalisé, avec un stator dont la première partie est massive et dont la seconde partie est constituée par un empilement de tôles.

Les caractéristiques ci-dessus ainsi que d'autres apparaîtront mieux à la lecture de la description qui suit d'un mode particulier de réalisation de l'invention, donné à titre d'exemple non limitatif.

La description se réfère aux dessins qui l'accompagnent, dans lesquels :
- la figure 1 est une représentation simplifiée d'un capteur, en coupe suivant un plan médian passant par l'axe ;
- la figure 2 est une figure en coupe suivant la ligne II-II de la figure 1 ;
- la figure 3 est une vue en élévation d'une des tôles du stator, faisant apparaître les encoches de passage des bobines secondaires portées par le stator ;
- la figure 4 montre l'allure des lignes de flux magnétiques dans la partie semi-cylindrique du rotor et dans les tôles, lorsque le rotor est en position médiane ;
- la figure 5 est un schéma électrique de principe du capteur et de ses liaisons ;
- la figure 6 montre l'allure de la variation des tensions de sortie des deux bobines statoriques en fonction de l'angle du rotor par rapport à sa position médiane ;
- la figure 7 similaire à la figure 1, montre une variante de réalisation à deux bobinages primaires ;
- la figure 8 est un schéma montrant l'adjonction de bobines de compensation au primaire ;
- la figure 9 représente schématiquement en coupe une variante de réalisation du rotor ;
- la figure 10 représente schématiquement en élévation latérale, le rotor représenté sur la figure 9 ;
- la figure 11 représente schématiquement, vue en élévation, une tôle du stator, faisant apparaître les encoches de passage des bobines secondaires portées par le stator ;
- la figure 12 représente schématiquement, de manière agrandie, une encoche de la tôle représentée sur la figure 11 ; et
- la figure 13 représente schématiquement, selon une vue analogue à celle de la figure 1, une variante du capteur selon l'invention.

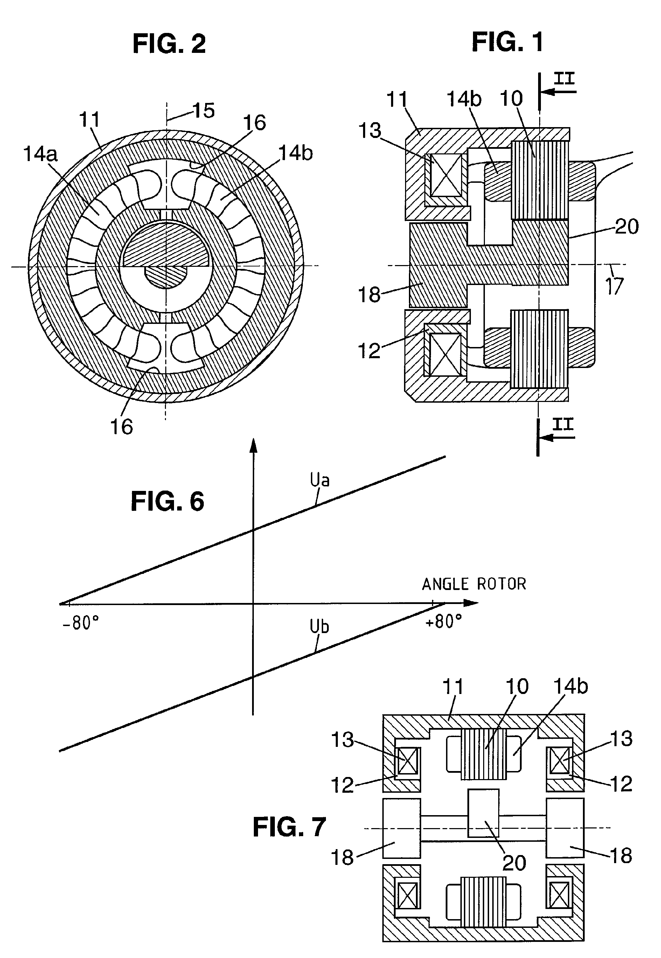

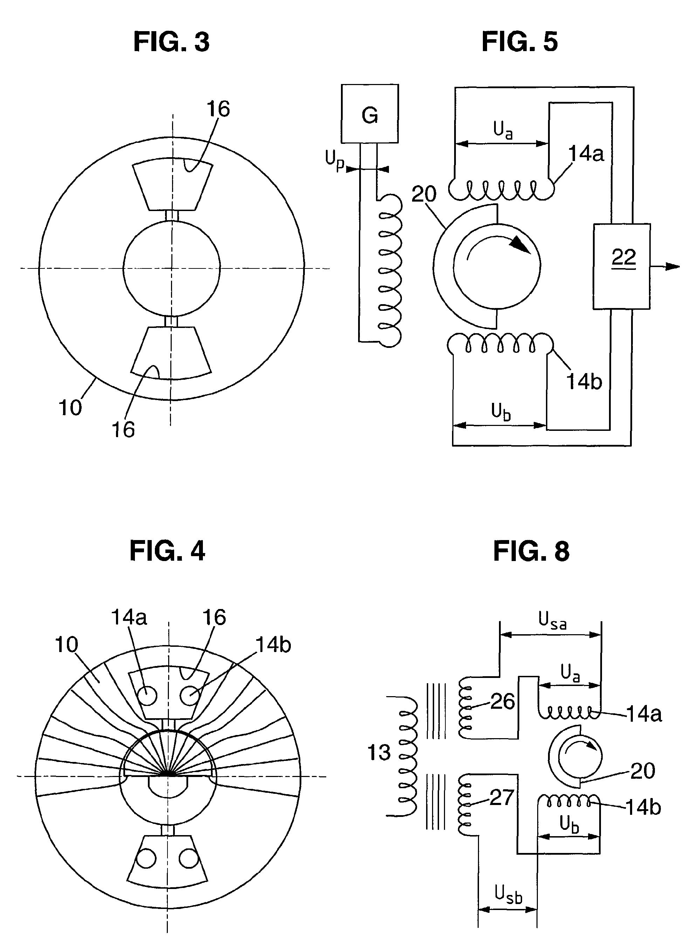

Le capteur représenté sur les figures 1 à 4 peut être regardé comme ayant un stator et un rotor. Le stator comporte une armature en matériau ferromagnétique, constituée en deux parties assemblées dans le cas illustré en figure 1. Une première partie 11, qui peut être notamment en matériau ferromagnétique massif, est de révolution avec une section droite en forme de L. Dans cette partie 11 est pratiqué un logement annulaire de réception du support 12 d'une bobine primaire 13, constituée par un enroulement de spires jointives. Cette bobine primaire 13 a un montage et une constitution similaires à celles dune bobine de transformateur tournant. Elle est prévue pour être alimentée par un générateur C (figure 5) sous une tension alternative constante. En général, la fréquence d'alimentation sera comprise entre 400 Hz et 10 KHz. La seconde partie 10 de l'armature du stator est constituée par un anneau fixé à la première partie pour assurer la continuité du circuit magnétique, ayant une structure feuilletée dans le sens axial. On peut notamment utiliser des tôles minces (par exemple de 0,35 mm d'épaisseur environ) en fer-nickel. Dans une variante de réalisation, utilisable notamment lorsque la fréquence d'alimentation est relativement basse, la partie 10 est également en matériau ferromagnétique massif.

La seconde partie 10 porte deux bobines secondaires, 14a et 14b, disposées symétriquement par rapport à un plan médian 15 passant par un axe 17. Les bobines présentent une forme générale ayant une courbure telle qu'elles se placent à peu près coaxialement au rotor et elles traversent la partie 10 par les encoches ou fenêtres 16. Ces encoches ou fenêtres 16 sont particulièrement aisées à réaliser dans des tôles du genre représenté en figure 3.

Les bobines identiques 14a et 14b, présentant une forme d'anneau cintré approximativement semi-cylindrique, occupent chacune un angle aussi proche que possible de 180°. Elles se présentent chacune sous forme d'un enroulement dont les fils sont courbés de façon à avoir des portions semi-circulaires autour de l'axe 17, raccordées par des portions s'étendant parallèlement à l'axe.

Le rotor est constitué en matériau ferromagnétique. Il peut être de constitution massive ou en plusieurs pièces assemblées. Il peut être regardé comme ayant successivement, dans le sens axial :
- un tronçon de révolution 18 situé radialement au droit du bobinage primaire et délimitant un entrefer de faible dimension radiale, et
- un tronçon présentant, au droit des bobines secondaires, un segment semi-cylindrique 20 de diamètre suffisamment supérieur à celui du reste du développement angulaire pour provoquer seul un couplage de la bobine primaire avec les bobines secondaires 14a et 14b.

Ce dernier couplage varie, pour chaque bobine, en fonction de la position angulaire du rotor et il est localement très serré, là où la valeur de l'entrefer est très faible.

Dans un tel capteur les tensions Ua et Ub qui apparaissent aux bornes des bobines secondaires, pour une tension au primaire donné, varient en fonction de la position angulaire du primaire comme indiqué sur la figure 6. La variation des tensions est pratiquement linéaire sur une plage angulaire qui atteint ±80° et ne dépend pratiquement pas des charges au secondaire. Les déphasages des tensions secondaires Ua et Ub par rapport à la tension primaire restent sensiblement constantes quelle que soit la position du rotor.

Le signal de sortie représentatif de l'angle du rotor par rapport à une position médiane peut être fourni par un amplificateur différentiel 22 relié aux bobines secondaires.

Dans une variante de réalisation, le capteur permet de fournir un signal représentatif d'harmoniques en connectant en série les bobines secondaires 14a et 14b. La connaissance de tels harmoniques est utilisée dans certains circuits d'asservissement.

Dans une autre variante illustrée en figure 7, on retrouve une armature ayant une première partie 11 qui porte les supports 12 de deux bobinages montés en série et constituant une bobine primaire 13 et une seconde partie 10 constituée par un paquet de tôles. L'armature statorique constitue, avec le rotor, un circuit magnétique fermé. Les deux bobinages de la bobine primaire 13 sont à spires jointives et encore alimentés en série par une tension alternative qui génère un flux magnétique alternatif dans le circuit.

Le rotor a une constitution symétrique et comporte cette fois deux tronçons de révolution 18 placés en face des bobinages primaires et un segment semi-cylindrique 20 placé en face du paquet de tôles.

Les tronçons de révolution 18 (rotoriques) présentent donc un entrefer constant quelle que soit la position angulaire du rotor. Le segment semi-cylindrique 20, constitué par un secteur de 180°, voit une section totale constante du circuit magnétique sur un débattement de ±80°. Ainsi, quelle que soit la position du rotor, l'impédance globale du circuit magnétique reste constante.

Les deux bobines 14a et 14b ont le même nombre de spires et sont placées dans la seconde partie 10, dans les encoches du paquet de tôles, de façon symétrique. La quantité de flux magnétique qui traverse ces bobines dépend essentiellement de la position du rotor par rapport aux encoches du rotor. Les bobines secondaires 14a et 14b génèrent en conséquence chacune une tension alternative dont l'amplitude varie avec la position du rotor. Cette tension de sortie est proportionnelle à la tension primaire Up et en phase avec elle. L'amplitude des tensions secondaires Ua et Ub dépend, comme dans le cas précédent, du rapport des surfaces en regard du segment semi-cylindrique 20 à droite et à gauche de l'encoche du paquet de tôles de la seconde partie 10.

Le mode de réalisation de la figure 7, comme celui de la figure 1, peut comporter des bobines de compensation 26 et 27 (figure 8) ayant le même nombre de spires et interchangeables. Ces bobines de compensation 26 et 27 peuvent être placées dans les mêmes supports de bobine 12 que la bobine primaire 13.

Ces bobines de compensation 26 et 27 génèrent chacune une tension alternative Uc d'amplitude constante, proportionnelle à la tension primaire Up et en phase avec elle.

Comme représenté sur la figure 8, les tensions de sortie sont obtenues en montant en série les bobines de compensation 26 et 27 et les bobines secondaires 14a et 14b. Une première tension de sortie Uₛₐ est obtenue aux bornes du montage en série des bobines 26 et 14a. Une autre tension de sortie U_{sb} est obtenue aux bornes du montage en série des bobines 27 et 14b.

Dans une autre variante, les bobines sont montées en série-opposition et fournissent directement un signal de sortie.

Dans encore une autre variante, des enroulements de compensation pour les deux secondaires peuvent être montés dans le support de la bobine primaire pour augmenter les tensions secondaires.

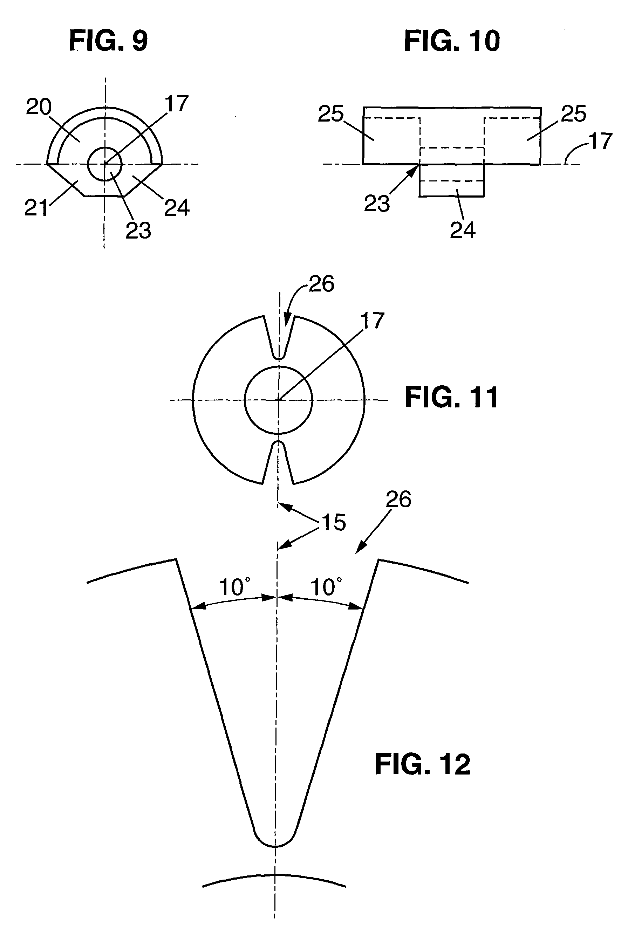

Selon encore une variante, illustrée par les figures 9 et 10, le rotor comporte une partie centrale 24 et deux parties latérales 25. La partie centrale est constituée de deux segments semi-cylindriques 20, 21, destinés à être placés entre la bobine primaire 13 et les bobines secondaires 14a et 14b. Le segment semi-cylindrique 20 est de révolution autour de l'axe 17. La partie semi-cylindrique 21 est polygonale avec trois plans s'étendant parallèlement à l'axe 17. Le volume de la partie semi-cylindrique 20 est supérieur à celui de la partie semi-cylindrique 21.

De part et d'autre de la partie centrale 24, s'étendent des ailes 25. Chaque aile 25 s'étend sous la forme d'un demi-tube centré sur l'axe 17. Les ailes 25 sont positionnées au droit du bobinage primaire 13 pour l'une et au droit des bobinages secondaires 14a, 14b pour l'autre.

La partie centrale 24 du rotor est traversée, selon l'axe 17, d'un passage 23 permettant d'associer le rotor, conçu ici comme un satellite, à un arbre (non représenté). Cet arbre est par exemple constitué d'un matériau magnétique tel que l'inox 303.

Le satellite représenté sur les figures 9 et 10 est constitué d'un matériau magnétique tel que FeNi 49. Le satellite et l'arbre sont solidarisés l'un à l'autre, par exemple grâce à un collage.

Selon cette variante, tout le flux magnétique généré par les bobines passe dans le satellite, dans les tôles de la seconde partie 10 et dans l'armature.

Selon encore une autre variante, illustrée par les figures 11 et 12, les tôles de la seconde partie 10 peuvent comporter des encoches 26 ouvertes vers l'extérieur. Ces encoches 26 s'ouvrent sur un angle de 10° de part et d'autre du plan médian 15. Par cette géométrie, on a continuité du métal en regard du rotor quelle que soit sa position. Ainsi, le flux magnétique passe toujours du satellite aux tôles, quelle que soit la position de ce satellite.

Comme on l'a vu précédemment, grâce au capteur selon l'invention, on obtient une variation des tensions pratiquement linéaire sur une plage angulaire qui atteint ±80°. On constate donc que, si l'ouverture angulaire des encoches fait 10°, la fonction du capteur se trouve optimisée.

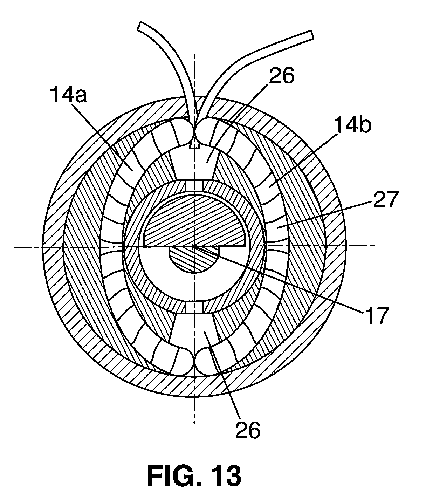

Selon encore une autre variante illustrée par la figure 13, les bobines secondaires 14a, 14b présentent une forme générale ayant une courbure telle qu'elles sont plus éloignées de l'axe 17 au niveau des encoches 26, que dans la partie centrale du segment courbé 27. Ainsi, les bobines secondaires 14a, 14b ont une portion de courbure plus plate et ne sont pas concentriques. Ce type de configuration est favorisé par l'utilisation d'encoches ouvertes vers l'extérieur telles que décrites en relation avec les figures 11 et 12.

De nombreuses autres variantes de l'invention peuvent être envisagées sans sortir du cadre de l'invention. En particulier, on pourra utiliser différentes combinaisons des différentes variantes mentionnées et décrites ci-dessus.

## Revendications

1. Capteur inductif différentiel de position angulaire, comprenant :
- un stator ayant une armature (10,11) de révolution autour d'un axe (17), en matériau ferromagnétique, portant :
. une bobine primaire annulaire (13) centrée sur l'axe (17), prévue pour être alimentée par une tension alternative, de constitution telle qu'elle génère un flux électromagnétique dans l'armature et
. deux bobines secondaires identiques (14a, 14b), disposées symétriquement par rapport à un plan médian (15) passant par l'axe (17), chacune en forme d'anneau cintré (16), traversant un bras de l'armature par deux encoches ménagées dans le sens axial dans l'armature, autour du plan médian, et
- un rotor en matériau ferromagnétique ayant, dans le sens axial, un tronçon de révolution situé au droit du bobinage primaire et un tronçon présentant, au droit des bobines secondaires, un segment semi-cylindrique provoquant un couplage de la bobine primaire avec les bobines secondaires qui varie en fonction de la position angulaire du rotor.

2. Capteur suivant la revendication 1, dont l'armature comporte une première partie annulaire en matériau massif, pouvant présenter une section droite en L, portant un support de la bobine primaire, et une seconde partie en forme d'anneau, portant les bobines secondaires et constituant le dit bras.

3. Capteur suivant la revendication 2, dont la seconde partie de l'armature est en matériau ferromagnétique feuilleté dans le sens axial.

4. Capteur suivant la revendication 1, 2 ou 3, **caractérisé en ce que** les bobines secondaires (14a, 14b) présentent une forme générale ayant une courbure telle qu'elles se placent à peu près coaxialement au rotor et traversent le bras de l'armature (10) par des encoches ou fenêtres (16).

5. Capteur suivant l'une des revendications 1 à 3, **caractérisé en ce que** les bobines secondaires (14a,14b) présentent une forme générale ayant une courbure telle qu'elles s'éloignent de l'axe (17), dans un déplacement de cet axe vers les encoches (26).

6. Capteur suivant l'une quelconque des revendications précédentes, **caractérisé en ce que** le segment semi-cylindrique est de diamètre suffisamment supérieur à celui du reste du développement angulaire pour provoquer seul un couplage de la bobine primaire avec les bobines secondaires (14a et 14b).

7. Capteur suivant l'une quelconque des revendications précédentes, **caractérisé en ce qu'**il comporte un amplificateur différentiel (22) relié aux bobines secondaires pour fournir un signal de sortie.

8. Capteur suivant l'une quelconque des revendications 1 à 6, **caractérisé en ce que** les bobines secondaires (14a, 14b) sont connectées en série pour fournir les harmoniques des signaux des bobines secondaires.

9. Capteur suivant l'une quelconque des revendications 1 à 6, **caractérisé en ce que** la bobine primaire est constituée de deux bobinages annulaires placés de part et d'autre du plan médian et du segment semi-cylindrique.

10. Capteur suivant l'une quelconque des revendications 1 à 6 et 9, **caractérisé en ce qu'**il comporte de plus des bobines de compensation (26, 27) placées chacune en série avec une des bobines secondaires (14a, 14b) et donnant au circuit magnétique une impédance constante.
